# EUROPÄISCHE PATENTSCHRIFT

(11) **EP 2 189 398 B1**
(45) Veröffentlichungstag und Bekanntmachung des Hinweises auf die Patenterteilung: **04.07.2012**
(21) Anmeldenummer: 09174365.8
(22) Anmeldetag: 28.10.2009
(51) Int. Cl.: B65G 21/14, B65G 47/31

(54) **Bandförmige Fördereinrichtung und Verfahren zum etwa horizontalen Fördern von Formlingen**
Belt-form transport device and method for somewhat horizontal transportation of blanks
Dispositif de transport en forme de bande et procédé de transport approximativement horizontal d'ébauches

(30) Priorität: 21.11.2008 DE 102008058428
(43) Veröffentlichungstag der Anmeldung: 26.05.2010
(73) Patentinhaber: Hans Lingl Anlagenbau und Verfahrenstechnik GmbH & Co. KG, 86381 Krumbach (DE)
(72) Erfinder: Ebrecht, Markus, 89290, Buch (DE)
(74) Vertreter: Körber, Martin Hans

(56) Entgegenhaltungen:
- EP-A1- 0 433 231
- DE-B1- 1 684 038

## Beschreibung

Die Erfindung betrifft eine bandförmige Fördereinrichtung und ein Verfahren zum etwa horizontalen Fördern von auf der Fördereinrichtung hintereinander stehenden Formlingen gemäß dem Oberbegriff der Ansprüche 1 und 15.

Eine solche Fördereinrichtung und ein solches Verfahren dienen in bekannter Weise dazu, den Abstand zwischen den Formlingen oder Formlingsgruppen zu vergrößern. Dies wird durch zwei hintereinander angeordnete Förderer erreicht, von denen der vordere Förderer geringfügig tiefer angeordnet ist und mit einer größeren Fördergeschwindigkeit fördert als der hintere Förderer. Hierdurch werden die Formlinge bei der Übergabe vom hinteren auf den vorderen Förderer geringfügig abgesenkt und beschleunigt, wobei sich der Abstand zwischen den Formlingen vergrößert. Die gewünschte Abstandsvergrößerung kann z. B. zur Anpassung an weiterführende Fördereinrichtungen erforderlich sein.

In DE 1684038 B1 ist beispielsweise eine Fördereinrichtung und ein Verfahren zum etwa horizontalen Fördern gemäß dem Oberbegriff des Ansprüche 1 und 15 offenbart, bei der das Bilden von Lücken in einer kontinuierlich geförderten Formlingsreihe ermöglicht ist. Zur Übergabe der Formlinge vom Zuförderband zum Abförderband wird der Schnittpunkt der beiden Förderbänder dadurch verschoben (z.B. entgegen der Förderrichtung dadurch zurückgenommen), dass die vorderste Umlenkrolle des hinteren Förderbandes mittels des Zusammenwirkens einer Spannrolle mit einer Kurvenscheibe verhältnismäßig langsam horizontal hin und her verschoben wird.

Bei der soweit bekannten Fördereinrichtung ergibt sich im Übergangsbereich zwischen den Förderern ein die Positionsgenauigkeit der Formlinge betreffendes Übergabeproblem, das darin besteht, dass bei einem verhältnismäßig langsamen Übergang vom hinteren auf den vorderen Förderer die Formlinge auf beiden Seiten des vorderen Förderers mit unterschiedlicher Griff- und Reibungsintensität übernommen werden, was unter Berücksichtigung der gleichzeitig stattfindenden Beschleunigung dazu führt, dass die Formlinge auf einer Seite mehr vorbewegt werden als auf der anderen Seite und sich somit schräg stellen können, wodurch die weitere Verarbeitung der Formlinge beeinträchtigt oder kaum möglich wäre.

Der Erfindung liegt die Aufgabe zugrunde eine Fördereinrichtung und ein Verfahren der vorliegenden Arten so auszugestalten, dass die Gefahr einer Positionsveränderung der Formlinge bei der Übergabe vom hinteren auf den vorderen Förderer beseitigt oder wenigstens vermindert wird.

Diese Aufgabe wird durch die Merkmale der Ansprüche 1 und 15 gelöst. Vorteilhafte Weiterbildungen der Erfindung sind in den Unteransprüchen beschrieben.

Die Erfindungsgemäße Fördereinrichtung gemäß Anspruch 1 weist eine Beschleunigungsvorrichtung auf, mit der die Übergabe des jeweiligen Formlings vom hinteren auf den vorderen Förderer beschleunigbar ist.

Gemäß dem erfindungsgemäßen Verfahren nach Anspruch 15 wird die Übergabe des jeweiligen Formlings vom hinteren auf den vorderen Förderer beschleunigt.

Beiden erfindungsgemäßen Lösungen liegt die Erkenntnis zugrunde, dass es eines bestimmten Kraftmomentes und einer bestimmten Zeit bedarf, um einen Formling auf seiner Standfläche gegen seine Massenträgheit zu bewegen, und dass die Massenträgheit dazu ausgenutzt werden kann, eine ungewünschte Bewegung zu verhindern oder zumindest zu verringern, wenn die zur Verfügung stehende Wirkungszeit verringert wird.

Gemäß der Erfindung ergibt sich eine vorteilhafte und funktionsfähige Konstruktion da das förder-wirksame vordere Ende durch eine Zwischenumlenkrolle oder dergleichen gebildet ist, die in einem nach hinten gerichteten Abstand von der vorderen Umlenkrolle des hinteren Förderers angeordnet ist, und von der sich das bandförmige Förderelement abwärts zur vorderen Umlenkrolle erstreckt. Dabei ist es vorteilhaft, eine Hilfsum-lenkrolle vor der Zwischenrolle anzuordnen, um die der sich von der Zwischenrolle vorzugsweise steil nach unten erstreckende Längsabschnitt des bandförmigen Förderelements nach vorne zur vorderen Umlenkrolle umgelenkt wird. Die erfindungsgemäße Vorrichtung und das erfindungsgemäße Verfahren führen somit bei der beschleunigten Übergabe dazu, dass aufgrund der Zeitverringerung beim Übergang die Kräfte, die den Formling aus seiner gewünschten Position verstellen wollen, den Formling aufgrund seiner Massenträgheit nicht verstellen oder nur sehr geringfügig verstellen können und deshalb der Formling positioniert bleibt oder nur vernachlässigbar gering verstellt wird. Durch die Erfindung werden somit die Förderung und die Positionierung des bzw. der Formlinge beim Übergang vom hinteren auf den vorderen Förderer verbessert.

Im Rahmen der Erfindung sind unterschiedliche Maßnahmen möglich, um die Übergabe des Formlings vom hinteren auf den vorderen Förderer zu beschleunigen. Eine vorteilhafte Maßnahme besteht darin, den Förderer mit einer Verstellvorrichtung auszubilden, mit der das vordere förderwirksame Ende des hinteren Förderers, dann, wenn sich ein Formling im Übergangsbereich befindet, aus einer vorderen Ausgangsstellung nach hinten bewegbar ist bzw. bewegt wird. Eine solche Verstellvorrichtung bzw. ein solcher Verfahrensschritt ist auch besonders einfach, weil es beim Verstellen nur auf den Bewegungsmoment im Übergabebereich ankommt.

Deshalb lässt sich diese Bewegung nach hinten verhältnismäßig einfach durchführen. Dies gilt auch für die Rückbewegung in die Ausgangsstellung nach dem Übergang des Formlings auf den vorderen Förderer. Wesentlich ist, dass das förderwirksame vordere Ende des hinteren Förderers aus einer vor dem jeweiligen Formling befindlichen Position bis in einer Übergangsposition mit der erfindungsgemäßen Beschleunigung nach hinten bewegt wird, wobei die beschleunigte Übergabe dann automatisch stattfindet.

In den Unteransprüchen sind vorteilhafte Weiterbildungen der Erfindung beschrieben, die die beschleunigte Übergabe weiter verbessern und zu einfachen und kleinen Konstruktionen führen, die sich mit geringem Aufwand integrieren lassen, preiswert herzustellen sind und eine sichere Funktion gewährleisten.

Eine vorteilhafte Weiterbildung zur Beschleunigung der Übergabe des Formlings besteht darin, das Förderelement bezüglich dem Formling nach unten zu bewegen, das heißt zu beabstanden, so dass der Formling plötzlich bzw. schlagartig vom Förderelement des vorderen Förderers übernommen und nur von diesem zunächst beschleunigt weitergefördert wird. Diese Beabstandung lässt sich in vorteilhafter Weise durch eine Verstellvorrichtung erreichen, mit der das förderwirksame vordere Ende des hinteren Förderers bzw. die vordere Umlenkstelle des hinteren bandförmigen Förderelements nach hinten verlagert wird, wobei das Förderelement vom Formling nach unten beabstandet wird. Die Rückbewegung des förderwirksamen vorderen Endes kann direkt nach der Übergabe des Formlings erfolgen, vorzugsweise mit einer Geschwindigkeit, die etwa der Fördergeschwindigkeit des hinteren Förderers entspricht, so dass das förderwirksame hintere Ende den sich in der Übergabeposition befindlichen Formling nicht überholt. Wesentlich ist, dass das förderwirksame vordere Ende sich wieder in seiner Ausgangsposition befindet, wenn der nächste Formling zur Übergabestelle gelangt.

Nachfolgend wird die Erfindung anhand von vorteilhaften Ausgestaltungen und Zeichnungen näher erläutert. Es zeigt
- Fig. 1: eine erfindungsgemäße Fördereinrichtung in der Seitenansicht;
- Fig. 2: die Fördereinrichtung gemäß Fig. 1 in der Draufsicht;
- Fig.: 3 die in Fig. 1 mit X gekennzeichnete Einzelheit der Fördereinrichtung in vergrößerter Darstellung.

Es ist der Zweck der in ihrer Gesamtheit mit 1 bezeichneten Fördereinrichtung, eine Vielzahl vorzugsweise einander gleicher Formlinge 2 etwa horizontal zu fördern und dabei Abstandsveränderungen zwischen den Formlingen 2 zu schaffen. Im Rahmen der Erfindung können die mit einem nicht dargestellten Zuführungsförderer der Fördereinrichtung 1 zugeführten Formlinge 2 in einem Längsabstand (nicht dargestellt) voneinander zugeführt werden oder ohne Längsabstand zugeführt werden, d.h. in der Längsrichtung aneinanderliegend zugeführt werden. Dabei kann die Abstandsveränderung dazu dienen, einen Längsabstand a zwischen den Formlingen 2 zu schaffen, oder einen Längsabstand a zu verändern, das heißt zu vergrößern oder zu verkleinern.

Beim vorliegenden Einsatzbeispiel der Fördereinrichtung 1 dient diese zur Abstandsveränderung von Formlingen 2 der Bauindustrie, z. B. von Strang-Längsabschnitten, die als quaderförmige Formlinge 2 flach oder hochkant auf wenigstens einem Förderelement 3a bzw. 4a der Fördereinrichtung 1 stehend gefördert werden. Dabei erstrecken sich die Vorder- und Rückseiten der Formlinge 2 vorzugsweise rechtwinklig zur Förderrichtung 6. Bei den Formlingen 2 kann es sich z. B. um Bausteine wie Ziegelsteine oder Dachpfannen handeln. Dabei kann die Fördereinrichtung 1 sich in einer Förderlinie befinden, die einer Strang-Querschneidevorrichtung zum Abschneiden der Formlinge 2 von einem nicht dargestellten Strang nachgeordnet ist, oder die Fördereinrichtung 1 kann auch in eine Förderlinie integriert sein, die sich von einem nicht dargestellten Trockner oder Brennofen erstreckt. Im zuerst genannten Fall ist das z. B. keramische Material der Formlinge 2 noch plastisch verformbar. Im zweiten Fall ist das z. B. keramische Material der Formlinge hart.

Die Hauptgruppen der Fördereinrichtung 1 sind ein hinterer Förderer 3 und ein vorderer Förderer 4, die in der Längs- bzw. Förderrichtung 6 hintereinander liegend angeordnet sind, so dass sich zwischen dem vorderen förderwirksamen Ende 3b des hinteren Förderers 3 und dem hinteren Ende 4b des vorderen Förderers 4 ein Übergangsbereich 1a befindet, der dadurch gebildet ist, dass ein vorderer Endbereich des hinteren Förderers 3 und ein hinterer Endbereich des vorderen Förderers 4 mit einander zugewandten und quer versetzt angeordneten Vorsprüngen und Ausnehmungen kammartig ineinander greifen. Beim vorliegenden Ausführungsbeispiel ist dieser kammartige Eingriff im Übergangsbereich 1a dadurch gebildet, dass beide Förderer 2, 4 jeweils aus mehreren quer in einem Abstand b voneinander angeordneten Förderer-Querabschnitten 3c bzw. 4c bestehen, die einander im Übergangsbereich 1a seitlich überlappen und jeweils ein schmales bandförmiges und umlaufendes Förderelement 3a, 4a aufweisen. Dies ist möglich, weil die Breiten c, d der Fördererquerabschnitte 3c, 4c kleiner sind, als die zugehörigen Abstände b.

Die Förderelemente 3a, 4a der Förderer 3, 4 können durch endlose Förderbänder gebildet sein, die mit einem Obertrum 3d, 4d und einem Untertrum 3e, 4e jeweils um wenigstens zwei endseitige Umlenkrollen 3f, 4f umlaufen, von denen jeweils eine z. B. die vorderen Umlenkrollen 3f, 4f, durch einen Drehantrieb 8, 9 drehantreibbar sind.

Die Umlenkrollen 3f, 4f und die Förderelemente 3a, 4a können zwischen angedeuteten Seitenwänden 10a, 10b der Förderer 3, 4 bzw. Förderquerabschnitte 3c, 4c gelagert und geführt sein. Das jeweilige Obertrum 3d, 4d ist dabei, z. B. gleitend, nach unten abgestützt, um die Formlinge 2 tragen zu können.

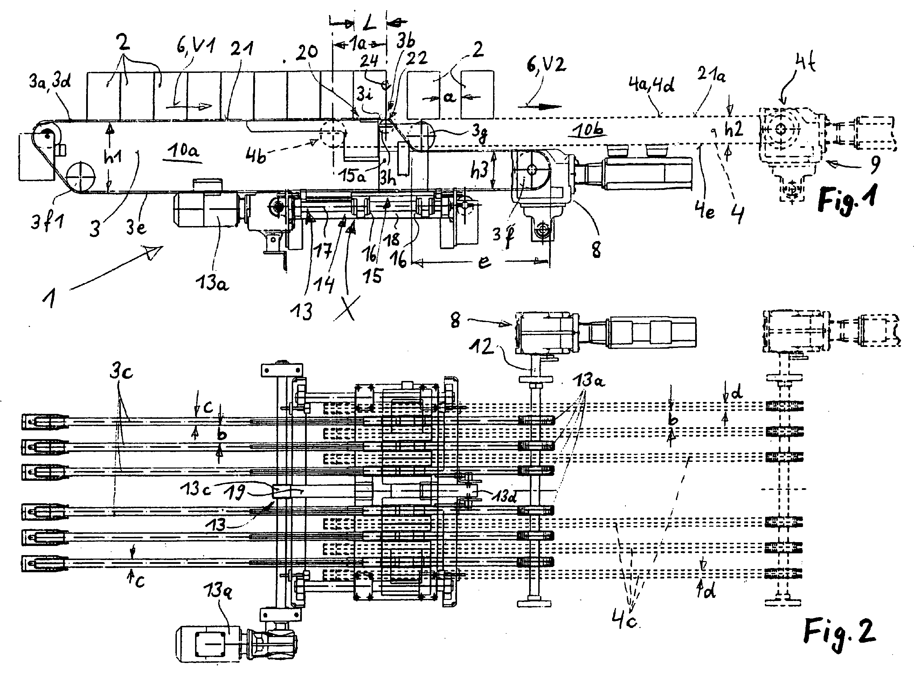

Die Höhen h1, h2 der Förderer 3, 4 sind unterschiedlich, wobei der hintere Förderer 3 eine größere Höhe h1 aufweist, z. B. etwa doppelt so hoch ist, als der vordere Förderer 4. Dabei ist die Höhe h3 in einem vorderen Endbereich des hinteren Förderers 3 soweit nach unten verjüngt, dass der vordere Endbereich sich unterhalb eines hinteren Endbereichs des vorderen Förderers 4 befindet. Hierdurch ist es in einfacher Weise möglich, eine quer durchgehende Antriebswelle 11 mit zugehörigen Antriebsrädern 11a für den Antrieb der Förderelemente 3a des hinteren Förderers 3 zu realisieren, wie es insbesondere aus Fig. 1 und 2 zu ersehen ist.

Eine entsprechend quer durchgehende Antriebswelle 12 mit zugehörigen Antriebsrädern 12a ist am vorderen Ende für die Förderelemente 4a des vorderen Förderers 4 vorgesehen.

Die Förderelemente 3a, 4a können bandförmige Förderelemente, z. B. Flach- oder Zahnriemen sein, die um die Umlenkrollen 3f, 4f umlaufen.

Der nach unten verjüngte vordere Endbereich des hinteren Förderers 3 ist durch eine stationäre Hilfsumlenkrolle 3g gebildet, die in einem Abstand e vom vorderen Ende des hinteren Förderers 3 angeordnet ist. Hinter dieser Hilfsumlenkrolle 3g befindet sich eine Zwischenumlenkrolle 3h, vorzugsweise kleineren Durchmessers, die durch einen Übergabeantrieb 13 in einer Längsführung 14 hin und her verschiebbar gelagert ist.

Das bandförmige Förderelement 3a erstreckt sich von der Zwischenumlenkrolle 3h vorzugsweise möglichst steil nach unten und wird von der Hilfsumlenkrolle 3g vorzugsweise horizontal nach vorne und zur vorderen Umlenkrolle 3 umgelenkt.

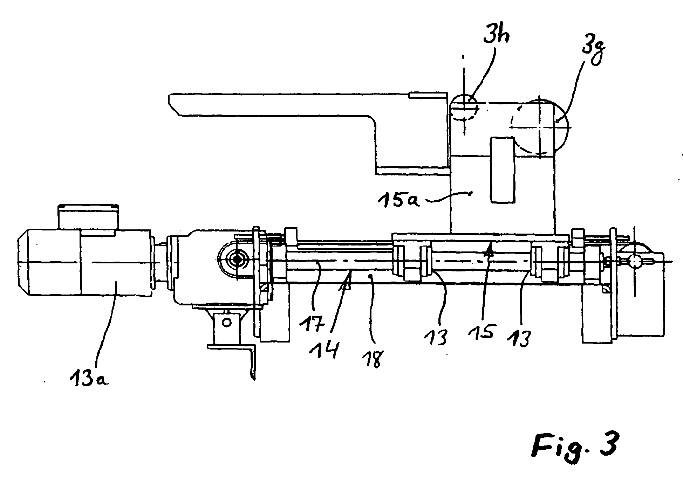

In der in Fig. 1 dargestellten Stellung befindet sich die Zwischenumlenkrolle 3h in einer vorderen Ausgangsstellung, bei der es sich z. B. um eine vordere Hubendstellung handeln kann, aus der die Zwischenumlenkrolle 3h mit dem Hubantrieb des Übergabeantriebs 13 nach hinten in eine hintere Endstellung (in Fig. 1 und 3 nicht dargestellt) und wieder zurück verschiebbar ist. Hierzu ist die Zwischenumlenkrolle 3h an einem Schieber 15 frei drehbar gelagert, der in der Längsführung 14 längs verschiebbar gelagert ist, z. B. mit jeweils zwei in einem Längsabstand voneinander angeordneten Führungslöchern 16 im Schieber 15, die auf einer Führungsstange 17 der Längsführung 14 verschiebbar gelagert sind. Entsprechend ausgebildete Schiebelager sind auf jeder Seite des hinteren Förderers 3 ausgebildet. Zur Lagerung der Führungsstangen 17 kann ein quer durchgehender Führungsrahmen 18 vorgesehen sein, an dem auch der Antriebsmotor 13a des Übergabeantriebs 13 befestigt ist. Zur Antriebsverbindung mit dem Schieber 15 kann ein, z. B. mittig angeordneter, Antriebsriemen 19, insbesondere Zahnriemen, vorgesehen sein, der um eine hintere Antriebsrolle 13b und eine vordere Umlenkrolle 13c umläuft und im Bereich seines Obertrums mit dem Schieber 15 fest verbunden ist.

Der Schieber 15 weist zwei sich von seinen seitlichen Rändern nach oben erstreckende Stegplatten 15a auf, die den tragenden Körper des hinteren Förderers 3 seitlich mit Bewegungsspiel übergreifen und in deren oberen Endbereichen die Hilfsumlenkrolle 3g und die Zwischenumlenkrolle 3h drehbar gelagert sind und sich dazwischen z. B. von der einen zur anderen Seite erstrecken. Die Hilfsumlenkrolle 3g kann aber auch durch die den Förderer-Querabschnitten 3c zugeordneten Rollenscheiben gebildet sein, die auf einer durchgehenden Achse drehbar oder auf einer Welle gelagert sind oder jeweils an einem Lagerarm drehbar gelagert sind, die sich z. B. zwischen den Querabschnitten 3c und/oder 4c der Förderer 3, 4 erstrecken und an einem Lagerkörper abgestützt sind (nicht dargestellt). Wie die hinteren und vorderen Umlenkrollen 3f, 4f bestehen auch die Hilfsumlenkrolle 3g und die Zwischenumlenkrolle 3h jeweils aus einer durchgehenden Welle bzw. Achse, auf der im Bereich der zugehörigen Förderer-Querabschnitte 3c, 4c und der zugehörigen entsprechend schmalen bandförmigen Förderelemente 3a, 4a Teilrollen angeordnet sind, um die die bandförmigen Förderelemente 3a, 4a zwecks Umlenkung laufen.

Der hintere Förderer 3 weist eine weitere hintere Umlenkrolle 3f1 auf, die unterhalb der hinteren Umlenkrolle 3f etwa in der Höhe der vertieften vorderen Umlenkrolle 3f angeordnet und frei drehbar gelagert ist sowie aus mehreren den Querabschnitten 3c zugeordneten Teilrollen besteht.

Zur Lagerung des hinteren und des vorderen Förderers 3, 4 sowie der Antriebe 8, 9, 13 ist ein auf einem Boden stehendes Gestell vorgesehen, das aus Vereinfachungsgründen nicht dargestellt ist.

Der hintere und der vordere Förderer 3, 4 können mit den Oberseiten ihres Obertrums 3d, 4d in einer gemeinsamen horizontalen Förderebene 21 angeordnet sein. Es hat sich aber als vorteilhaft erwiesen, die Förderebene 21 a des vorderen Förderers 4 etwas tiefer anzuordnen als die Förderebene 21 des hinteren Förderers 3, z. B. um etwa 3mm, wodurch sich am vorderen Ende 3b des hinteren Förderers 3 eine kleinere Abwärtsstufe 22 ergibt. Hierdurch wird der Bereich, in dem zum einen der hintere Förderer 3 und zum anderen der vordere Förderer 4 den jeweils zugehörigen Formling 2 im Übergangsbereich 1a trägt, und unterseitig ergreift und fördert, derart verringert, dass der Formling 2 bis zum vorderen Ende 3b nur vom hinteren Förderer 3 getragen und durch Reibschluss ergriffen und gefördert wird, während vor dem vorderen Ende 3b der Formling 2 nur vom vorderen Förderer 4 getragen und ergriffen wird. Dagegen wird dann, wenn die Oberseiten der Obertrume 3d, 4d in einer gemeinsamen horizontalen Förderebene 21 angeordnet sind, der jeweils zugehörige Formling 2 im Übergangsbereich 1a von beiden Förderern 3, 4 getragen, durch Reibschluss unterseitig ergriffen und gefördert.

Es besteht bei einer solchen Ausgestaltung die Gefahr, dass die Trag- und Angriffsbedingungen (Reibschlussmitnahme) auf beiden Seiten der Fördereinrichtung 1 aufgrund der unterschiedlichen Fördergeschwindigkeiten V1, V2 unterschiedlich sind und dadurch im Übergangsbereich 1 a der Formling 2 sich horizontal verdrehen kann, was eine ungewünschte Lageveränderung bedeutet.

In beiden vorgenannten Ausgestaltungsfällen, nämlich sowohl dann, wenn die Fördererebenen 21, 21 a in einer Ebene liegen, als auch dann, wenn die Förderebene 21 a des vorderen Förderers 4 geringfügig tiefer angeordnet ist, lassen sich vorbeschriebene ungewollte Schrägstellungen der Formlinge beim Übergang vom hinteren auf den vorderen Förderer 3, 4 durch eine erfindungsgemäße Übergabebeschleunigungsvorrichtung 20 vermeiden oder wenigstens verringern, deren Hauptfunktionsmerkmale die Zwischenumlenkrolle 3h und deren Bewegbarkeit nach hinten und wieder zurück sind.

Nachfolgend werden die Funktion der Fördereinrichtung 1 und ein Verfahren zum Fördern von Formlingen 2 auf einer Fördereinrichtung 1 beschrieben. Im Rahmen der Erfindung können die Formlinge 2 auf dem hinteren Förderer 3 aneinanderliegend gefördert werden, wie es Fig. 1 zeigt, oder die Formlinge 2 können auch einen Längsabstand voneinander aufweisen, was nicht dargestellt ist. Zur Vergrößerung des Abstands der Formlinge 2 voneinander wird der vordere Förderer 4 mit einer Fördergeschwindigkeit V2 betrieben, die größer ist als die Fördergeschwindigkeit V 1 des hinteren Förderers 3. Für eine Abstandsverringerung der im Längsabstand voneinander geförderten Formlingen 2 wird der vordere Förderer 4 mit einer Fördergeschwindigkeit V2 betrieben, die geringer ist als die Fördergeschwindigkeit V 1 des hinteren Förderers 3.

Wenn ein Formling 2 sich dem durch die seitlich überlappende Anordnung oder die Abwärtsstufe 22 bestimmten Übergabebereich nähert, wird dies durch einen Signalgeber 24 ermittelt, bei dem es sich z. B. um eine Lichtschranke handeln kann. In dieser Erkennungsposition kann der Formling 2 sich mit seiner Vorderseite am förderwirksamen vorderen Ende 3b befinden oder davon einen nach hinten gerichteten Abstand aufweisen. Auf diese Signalgebung hin schaltet eine vorhandene elektrische Steuereinrichtung die erfindungsgemäße Beschleunigung der Übergabe des Formlings 2 ein. Dabei wird das förderwirksame vordere Ende 3b bzw. die Zwischenumlenkrolle 3h durch den Übergabeantrieb 13 so schnell bzw. schlagartig nach hinten bis zum hinteren Endbereich des Formlings 2 bewegt, dass die Zeit der Übergabe auf den vorderen Förderer 4 stark verkürzt wird und deshalb der Formling 2 aufgrund seiner Massenträgheit solchen Übergabekräften widersteht, die ihn aus seiner gewollten Position aufgrund des Reibschlusses mit dem Förderelement 4a verlagern wollen.

Durch die schnelle Bewegung des förderwirksamen vorderen Endes 3b nach hinten, nämlich beim Ausführungsbeispiel der Zwischenumlenkrolle 3h und vorzugsweise auch der Hilfsumlenkrolle 3g, wird der den zugehörigen Formling 2 tragende Längsabschnitt 3i des Förderelements 3a des hinteren Förderers 3 nach unten verlagert, wodurch der zugehörige Formling 2 plötzlich auf das Förderelement 4a des vorderen Förderers 4 übergeben wird.

Die Länge der Bewegung nach hinten ist von dem Längsabstand des Formlings 2 von der Übergabestelle abhängig, bei dem die Bewegung nach hinten eingeleitet wird. Wenn dieser Längsabstand gering oder annähernd Null ist, reicht eine Bewegungslänge nach hinten aus, die der Längsabmessung L des Formlings entspricht, um die Übergabe erfindungsgemäß zu beschleunigen.

Die Position des Signalgebers 24 und/oder die Länge der Bewegung nach hinten sind vorzugsweise durch jeweils zugehörige Mechanismen einstellbar, um die Übergabebeschleunigungsvorrichtung 20 an unterschiedlich lange Formlinge 2 anpassen zu können.

Die Länge der Bewegung nach hinten kann z. B. durch einen Wegmesser (nicht dargestellt) vermittelt werden, auf dessen Signal die Bewegung nach hinten beendet wird. Die Vorbewegung in die Ausgangsstellung kann dann unmittelbar erfolgen, vorzugsweise mit einer Geschwindigkeit, die gleich oder geringfügig schneller ist als die Fördergeschwindigkeit V1 des hinteren Förderers 3, um insbesondere bei aneinander liegenden Formlingen 2 sich wieder in der Ausgangsstellung zu befinden, aus der der nächste Vorgang zur Beschleunigung der Übergabe des nächsten Formlings 2 eingeleitet werden kann.

Eine vorteilhafte Fördergeschwindigkeit V1 für den hinteren Förderer 3 beträgt etwa 0,1 Meter pro Sekunde (m/s) bis 1,5 m/s, vorzugsweise etwa 0,3 bis 0,8 m/s. Es ist bei Versuchen gefunden worden, dass eine gute Funktion erreicht wird, wenn die Geschwindigkeit des förderwirksamen vorderen Endes 3b etwa das 1- bis 2-fache der Fördergeschwindigkeit V1 des hinteren Förderers 3 beträgt.

Die Geschwindigkeit der nach hinten gerichteten Bewegung des förderwirksamen vorderen Endes 3b kann aber auch etwa 0,2 m/s bis 3,0 m/s, insbesondere etwa 0,6 bis 1,6 m/s betragen.

## Patentansprüche

1. Fördereinrichtung (1) zum etwa horizontalen Fördern von hintereinander angeordneten Formlingen (2), insbesondere von Längsabschnitten eines Stranges aus plastischem Material, z. B. Ton oder ähnlichem Material, für die Ziegelindustrie, mit
- einem hinteren Förderer (3)
- und einem diesem in der Förderrichtung (6) vorgeordneten vorderen Förderer (4),
- deren einander zugewandte Enden einander seitlich kammförmig überlappen,
- die unterschiedliche Fördergeschwindigkeiten (V 1, V2) aufweisen,
- und die jeweils ein oder mehrere nebeneinander angeordnete bandförmige Förderelemente (3a, 4a) aufweisen,
wobei die Fördereinrichtung (1) eine Übergabebeschleunigungsvorrichtung (20) aufweist, mit der jeweils die Übergabe der Formlinge (2) vom hinteren Förderer (3) auf den vorderen Förderer (4) beschleunigbar ist
**dadurch gekennzeichnet,**
**dass** die bandförmige Förderelemente (3a, 4a) durch endlose und um Umlenkrollen (3f, 4f) oder dergleichen umlaufende Endlosbänder gebildet sind und das förderwirksame vordere Ende (3b) des hinteren Förderers durch eine Zwischenumlenkrolle (3h) gebildet ist, die in einem nach hinten gerichteten Abstand von der vorderen Umlenkrolle (3f) angeordnet ist, und von der sich das bandförmige Förderelement (3a) abwärts zur vorderen Umlenkrolle (3t) erstreckt.

2. Fördereinrichtung nach Anspruch 1,
**dadurch gekennzeichnet,**
**dass** die Übergabebeschleunigungsvorrichtung (20) durch eine Vorrichtung gebildet ist, mit der das förderwirksame vordere Ende (3b) des hinteren Förderers (3) von einer Ausgangsstellung im Überlappungsbereich nach hinten bewegbar und dann wieder in seiner Ausgangsstellung bewegbar ist.

3. Fördereinrichtung nach Anspruch 2,
**dadurch gekennzeichnet,**
**dass** sie einen Signalgeber (24) aufweist, der die nach hinten gerichtete Bewegung des förderwirksamen vorderen Endes (3b) einleitet, wenn der Formling (2) sich im Bereich des förderwirksamen vorderen Endes (3b) oder in einem nach hinten gerichteten Abstand von diesem befindet.

4. Fördereinrichtung nach einem der vorhergehenden Ansprüche,
**dadurch gekennzeichnet,**
**dass** zwischen der Zwischenumlenkrolle (3h) und der vorderen Umlenkrollen (3f) eine Hilfsumlenkrolle (3g) angeordnet ist, zu deren Unterseite das Förderelement (3a) sich von der Zwischenumlenkrolle (3h) schräg bis steil erstreckt.

5. Fördereinrichtung nach einem der vorhergehenden Ansprüche,
**dadurch gekennzeichnet,**
**dass** die Oberseite des sich von der Zwischenumlenkrolle (3h) nach vorne erstreckenden Längsabschnitts des hinteren Förderers (3) nach unten verjüngt ist und unter den vorderen Förderer (4) vertieft ist.

6. Fördereinrichtung nach Anspruch 4 oder 5,
**dadurch gekennzeichnet,**
**dass** die Zwischenumlenkrolle (3h) und die Hilfsumlenkrolle (3g) an einem Schieber (15) gelagert sind, der in einer Längsführung (14) durch einen Übergabeantrieb (13) hin und her verschiebbar gelagert ist.

7. Fördereinrichtung nach Anspruch 6,
**dadurch gekennzeichnet,**
**dass** die Längsführung (14) unter dem hinteren Förderer (3) angeordnet ist, und der Schieber (15) den hinteren Förderer (3) seitlich übergreifende Stegwände (15a) aufweist, zwischen denen sich eine die Zwischenumlenkrolle (3h) tragende Welle oder Achse erstreckt und daran gelagert ist.

8. Fördereinrichtung nach einem der vorherigen Ansprüche,
**dadurch gekennzeichnet,**
**dass** der hintere und der vordere Förderer (3, 4) jeweils aus mehreren und in einem Querabstand (b) voneinander angeordneten Förderer-Querabschnitten (3c, 4c) mit jeweils einem umlaufenden bandförmige Förderelement (3a, 4a) bestehen, die im Überlappungsbereich kammförmig ineinander greifen.

9. Fördereinrichtung nach einem der vorherigen Ansprüche 6 bis 8,
**dadurch gekennzeichnet,**
**dass** die Ausgangsstellung des Schiebers (15) in der Längsrichtung des hinteren Förderers (3) verstellbar ist.

10. Fördereinrichtung nach einem der vorherigen Ansprüche 3 bis 9,
**dadurch gekennzeichnet,**
**dass** der Signalgeber (24) in der Längsrichtung des hinteren Förderers (3) verstellbar ist.

11. Fördereinrichtung nach einem der Ansprüche 2 bis 10,
**dadurch gekennzeichnet,**
**dass** die Länge der nach hinten gerichteten Bewegung des förderwirksamen vorderen Endes (3b) einstellbar ist.

12. Fördereinrichtung nach einem der vorherigen Ansprüche 2 bis 11,
**dadurch gekennzeichnet,**
**dass** die Geschwindigkeit der nach hinten gerichteten Bewegung des förderwirksamen vorderen Endes (3b) und vorzugsweise auch die Geschwindigkeit der nach vorne gerichteten Bewegung einstellbar ist.

13. Fördereinrichtung nach einem der vorherigen Ansprüche,
**dadurch gekennzeichnet,**
**dass** die Geschwindigkeit (V2) des vorderen Förderers (4) größer oder kleiner ist als die Geschwindigkeit (V1) des hinteren Förderers (3), zum Beispiel wahlweise auf eine größere oder kleinere Geschwindigkeit (V2) einstellbar ist.

14. Fördereinrichtung nach einem der vorherigen Ansprüche,
**dadurch gekennzeichnet,**
**dass** die Förderebene (21 a) des vorderen Förderers (4) etwas tiefer angeordnet ist als die Förderebene (21) des hinteren Förderers (3), z. B. um etwa 3mm tiefer angeordnet ist.

15. Verfahren zum etwa horizontalen Fördern von auf einer Fördereinrichtung (1) hintereinander stehenden Formlingen (2), insbesondere von Längsabschnitten eines Stranges aus plastischem Material, z. B. Ton oder ähnlichem Material, für die Ziegelindustrie, wobei die Fördereinrichtung umfasst
- einen hinteren Förderer (3)
- und einen diesem in der Förderrichtung (6) vorgeordneten vorderen Förderer (4),
- deren einander zugewandte Enden einander seitlich kammförmig überlappen,
- die unterschiedliche Fördergeschwindigkeiten (V 1, V2) aufweisen,
- und die jeweils ein oder mehrere nebeneinander angeordnete bandförmige Förderelemente (3a, 4a) aufweisen,
wobei
die Übergabe der Formlinge (2) vom hinteren Förderer (3) auf den vorderen Förderer (4) beschleunigt wird,
**dadurch gekennzeichnet,**
**dass** die bandförmige Förderung über endlose und um Umlenkrollen (3f, 3f1,4f,3g,3h,4b) oder dergleichen umlaufende Endlosbänder (3a,4a) erfolgt und eine Zwischenumlenkrolle (3h) das förderwirksame vordere Ende (3b) bildet, deren Anordnung in einem nach hinten gerichteten Abstand von der vorderen Umlenkrolle (3f) erfolgt, und von der sich das bandförmige Förderelement (3a) abwärts zur vorderen Umlenkrolle (3f) erstreckt.

16. Verfahren nach Anspruch 15,
**dadurch gekennzeichnet,**
**dass** bei der Übergabe der Formlinge (2) vom hinteren auf den vorderen Förderer (3, 4) das bandförmige Förderelement (3a) des hinteren Förderers (3) vom zu übergebenden Formling (2) nach unten bewegt wird.

17. Verfahren nach Anspruch 16,
**dadurch gekennzeichnet,**
**dass** die nach unten gerichtete Bewegung durch eine nach hinten gerichtete Bewegung einer Zwischenumlenkrolle (3h) erzeugt wird, von deren Oberseite das bandförmige Förderelement (3a) sich an deren Vorderseite schräg bis steil nach unten erstreckt.

18. Verfahren nach Anspruch 17,
**gekennzeichnet durch**
die Verwendung eines Schiebers (15), der die Zwischenumlenkrolle (3a) lagert und **durch** einen Übergabeantrieb (13) in einer Längsführung (14) des hinteren Förderers (3) aus einer vorderen Ausgangsstellung nach hinten und wieder zurück bewegt wird.

## Claims

1. A conveyor device (1) for the approximately horizontal transport of blanks (2) arranged one behind the other, especially longitudinal portions of a slab of plastic material, for example, clay or a similar material for the brick-making industry, with
- a rear conveyor (3)
- and a front conveyor (4) arranged in front of this in the transport direction (6),
- of which the mutually facing ends overlap one another laterally in a comb shape,
- which provide different transport velocities (V1, V2),
- and which each provide one or more belt-typed conveyor elements (3a, 4a) arranged side-by-side,
wherein the conveyor device (1) provides a transfer-acceleration device (20) with which the transfer of the blanks (2) in each case from the rear conveyor (3) to the front conveyor (4) can be accelerated,
**characterised in that**
the belt-typed conveyor elements (3a, 4a) are formed by endless belts running around deflection rollers (3f, 4f) or similar and the actively conveying front-end (3b) of the rear conveyor is formed by an intermediate deflection roller (3h), which is arranged at a spacing distance directed towards the rear from the front deflection roller (3f), and from which the belt-typed conveyor element (3a) extends downwards towards the front deflection roller (3f).

2. The conveyor device according to claim 1,
**characterised in that**
the transfer-acceleration device (20) is formed by a device, with which the actively conveying front-end (3b) of the rear conveyor (3) can be moved from a starting position in the overlapping region towards the rear and then back into its starting position.

3. The conveyor device according to claim 2,
**characterised in that**
it provides a signal transmitter (24) which initiates the motion directed towards the rear of the actively conveying front-end (3b), when the blank (2) is disposed in the region of the actively conveying front-end (3b) or at a distance from the latter directed towards the rear.

4. The conveyor device according to any one of the preceding claims,
**characterised in that**,
between the intermediate deflection roller (3h) and the front deflection roller (3f), an auxiliary deflection roller (3g) is arranged, to the underside of which the conveyor element (3a) extends from the intermediate deflection roller (3h) with a sloping to steep gradient.

5. The conveyor device according to any one of the preceding claims,
**characterised in that**
the upper side of the longitudinal portion of the rear conveyor (3) extending towards the front from the intermediate deflection roller (3h) is tapered downwards and is lowered below the front conveyor (4).

6. The conveyor device according to claim 4 or 5,
**characterised in that**
the intermediate deflection roller (3h) and the auxiliary deflection roller (3g) are mounted on a slider (15), which is mounted in a longitudinal guide (14) in such a manner that it can be moved to and fro by a transfer drive (13).

7. The conveyor device according to claim 6,
**characterised in that**
the longitudinal guide (14) is arranged below the rear conveyor (3), and the slider (15) provides web walls (15a) engaging laterally over the rear conveyor (3), between which a shaft or axis bearing the intermediate deflection roller (3h) extends and is mounted on the latter.

8. The conveyor device according to any one of the preceding claims,
**characterised in that**
the rear and the front conveyor (3, 4) each comprise several transverse conveyor portions (3c, 4c) arranged at a transverse distance (b) from one another, each with a peripheral belt-typed conveyor element (3a, 4a), which engage into one another in a comb shape in the overlapping region.

9. The conveyor device according to any one of the preceding claims 6 to 8,
**characterised in that**
the starting position of the slider (15) is adjustable in the longitudinal direction of the rear conveyor (3).

10. The conveyor device according to any one of the preceding claims 3 to 9,
**characterised in that**
the signal transmitter (24) is adjustable in the longitudinal direction of the rear conveyor (3).

11. The conveyor device according to any one of claims 2 to 10,
**characterised in that**
the length of the motion directed towards the rear of the actively conveying front-end (3b) is adjustable.

12. The conveyor device according to any one of the preceding claims 2 to 11,
**characterised in that**
the velocity of the motion directed towards the rear of the actively conveying front-end (3b) and preferably also the velocity of the motion directed towards the front is adjustable.

13. The conveyor device according to any one of the preceding claims,
**characterised in that**
the velocity (V2) of the front conveyor (4) is greater or smaller than the velocity (V1) of the rear conveyor (3), for example, being optionally adjustable to a greater or smaller velocity (V2).

14. The conveyor device according to any one of the preceding claims,
**characterised in that**
the transport plane (21a) of the front conveyor (4) is arranged somewhat lower than the transport plane (21) of the rear conveyor (3), for example, arranged approximately 3 mm lower.

15. A method for the approximately horizontal transport of blanks (2) arranged one behind the other on a conveyor device (1), especially longitudinal portions of a slab of plastic material, for example, clay or a similar material for the brick-making industry, wherein the conveyor device comprises
- a rear conveyor (3)
- and a front conveyor (4) arranged in front of this in the transport direction (6),
- of which the mutually facing ends overlap one another laterally in a comb shape,
- which provide different transport velocities (V1, V2),
- and which each provide one or more belt-typed conveyor elements (3a, 4a) arranged side-by-side,
wherein the transfer of the blanks (2) from the rear conveyor (3) to the front conveyor (4) is accelerated,
**characterised in that**
the belt-typed transport is implemented via endless belts (3a, 4a) running around deflection rollers (3f, 3f1, 4f, 3g, 3h, 4b) or similar, and an intermediate deflection roller (3h) forms the actively conveying front-end (3b), of which the arrangement is implemented at a spacing distance directed towards the rear from the front deflection roller (3f), and from which the belt-typed conveyor element (3a) extends downwards towards the front deflection roller (3f).

16. The method according to claim 15,
**characterised in that**,
in transferring the blanks (2) from the rear to the front conveyor (3, 4), the belt-typed conveyor element (3a) of the rear conveyor (3) is moved downwards from the blank (2) to be transferred.

17. The method according to claim 16,
**characterised in that**
the downwardly directed motion is generated by a motion of an intermediate deflection roller (3h) directed towards the rear, from the upper side of which the belt-typed conveyor element (3a) extends downwards at its front side with a sloping to steep gradient.

18. The method according to claim 17,
**characterised by**
the use of a slider (15), which bears the intermediate deflection roller (3a) and is moved from a front starting position downwards and back again by a transfer drive (13) within a longitudinal guide (14) of the rear conveyor (3).

## Revendications

1. Installation de convoyage (1) pour le convoyage approximativement horizontal d'ébauches (2) disposées les unes derrière les autres, en particulier de sections longitudinales d'un boudin en matériau plastique, par exemple en argile ou un matériau similaire, pour l'industrie de la terre cuite, avec
- un convoyeur arrière (3)
- un convoyeur avant (4) disposé en amont de celui-ci dans la direction de convoyage (6),
- dont les extrémités orientées les unes vers les autres se chevauchent latéralement en forme de peigne,
- qui ont des vitesses de convoyage différentes (V1, V2),
- et qui présentent respectivement un ou plusieurs éléments de convoyage en forme de bande (3a, 4a) disposés les uns à côté des autres,
- où l'installation de convoyage (1) présente un dispositif d'accélération de transmission (20) par lequel la transmission des ébauches (2) du convoyeur arrière (3) au convoyeur avant (4) peut être accélérée,
**caractérisée en ce que** les éléments de convoyage en forme de bande (3a, 4a) sont formés par des bandes sans fin passant autour de galets de renvoi (3f, 4f) ou analogue, et **en ce que** l'extrémité avant (3b) active pour le convoyage du convoyeur arrière est formée par un galet de renvoi intermédiaire (3h) qui est disposé à une distance dirigée vers l'arrière au galet de renvoi avant (3f) et depuis lequel s'étend l'élément de convoyage en forme de bande (3a) vers le bas vers le galet de renvoi avant (3f).

2. Installation de convoyage selon la revendication 1, **caractérisée en ce que** le dispositif d'accélération de transfert (20) est formé par un dispositif, par lequel l'extrémité avant (3b) active pour le convoyage du convoyeur arrière (3) est déplaçable d'une position de départ dans la zone de recouvrement vers l'arrière et ensuite à nouveau dans sa position de départ.

3. Installation de convoyage selon la revendication 2, **caractérisée en ce qu'**il présente un capteur de signaux (24) qui introduit le déplacement dirigé vers l'arrière de l'extrémité avant (3b) active pour le convoyage lorsque l'ébauche (2) se trouve dans la zone de l'extrémité avant (3b) active pour le convoyage ou à une distance dirigée vers l'arrière de celle-ci.

4. Installation de convoyage selon l'une des revendications précédentes, **caractérisée en ce qu'**est disposé entre le galet de renvoi intermédiaire (3h) et le galet de renvoi avant (3f) un galet de renvoi auxiliaire (3g), vers le côté inférieur duquel s'étend l'élément de convoyage (3a) du galet de renvoi intermédiaire (3h) d'une manière inclinée à fortement inclinée.

5. Installation de convoyage selon l'une des revendications précédentes, **caractérisée en ce que** le côté supérieur de la section longitudinale du convoyeur arrière (3) s'étendant depuis le galet de renvoi intermédiaire (3h) vers l'avant retrécit vers le bas et est approfondi sous le convoyeur avant (4).

6. Installation de convoyage selon la revendication 4 ou 5, **caractérisée en ce que** le galet de renvoi intermédiaire (3h) et le galet de renvoi auxiliaire (3g) sont logés à un poussoir (15) qui est logé de manière à pouvoir être déplacé alternativement dans un guidage longitudinal (14) par un entraînement de transfert (13).

7. Installation de convoyage selon la revendication 6, **caractérisée en ce que** le guidage longitudinal (14) est disposé sous le convoyeur arrière (3), et **en ce que** le poussoir (15) présente des parois à nervures (15a) passant latéralement sur le convoyeur arrière (3) entre lesquelles s'étend un arbre ou axe supportant le galet de renvoi intermédiaire (3h) et est logé à celui-ci.

8. Installation de convoyage selon l'une des revendications précédentes, **caractérisée en ce que** les convoyeurs arrière et avant (3, 4) sont constitués respectivement de plusieurs sections transversales de convoyeur (3c, 4c) disposées à un écart transversal (b) les unes des autres, avec respectivement un élément de convoyage en forme de bande (3a, 4a) s'étendant tout autour qui, dans la zone de recouvrement, viennent en prise en forme de peigne.

9. Installation de convoyage selon l'une des revendications précédentes 6 à 8, **caractérisée en ce que** la position de départ du poussoir (15) est ajustable dans la direction longitudinale du convoyeur arrière (3).

10. Installation de convoyage selon l'une des revendications précédentes 3 à 9, **caractérisée en ce que** le capteur de signaux (24) est ajustable dans la direction longitudinale du convoyeur arrière (3).

11. Installation de convoyage selon l'une des revendications 2 à 10, **caractérisée en ce que** la longueur du déplacement dirigé vers l'arrière de l'extrémité avant (3b) active pour le convoyage est réglable.

12. Installation de convoyage selon l'une des revendications précédentes 2 à 11, **caractérisée en ce que** la vitesse du déplacement dirigé vers l'arrière de l'extrémité avant (3b) active pour le convoyage et de préférence aussi la vitesse du déplacement dirigé vers l'avant sont réglables.

13. Installation de convoyage selon l'une des revendications précédentes, **caractérisée en ce que** la vitesse (V2) du convoyeur avant (4) est plus grande ou plus petite que la vitesse (V1) du convoyeur arrière (3), qu'elle est réglable par exemple sélectivement à une vitesse plus grande ou plus petite (V2).

14. Installation de convoyage selon l'une des revendications précédentes, **caractérisée en ce que** le plan de convoyage (21a) du convoyeur avant (4) est disposé un peu plus bas que le plan de convoyage (21) du convoyeur arrière (3), par exemple à peu près 3 mm plus bas.

15. Procédé pour le convoyage approximativement horizontal d'ébauches (2) disposées sur une installation de convoyage (1) les unes derrière les autres, en particulier de sections longitudinales d'un boudin en matériau plastique, par exemple en argile ou un matériau similaire pour l'industrie de la terre cuite, où l'installation de convoyage comprend
- un convoyeur arrière (3)
- un convoyeur avant (4) disposé en amont de celui-ci dans la direction de convoyage (6),
- dont les extrémités orientées les unes vers les autres se chevauchent latéralement en forme de peigne,
- qui présentent des vitesses de convoyage différentes (V1, V2),
- et qui présentent respectivement un ou plusieurs éléments de convoyage en forme de bande (3a, 4a) disposés les uns à côté des autres,
où
le transfert des ébauches (2) du convoyeur arrière (3) au convoyeur avant est accéléré, **caractérisé en ce que** le convoyage en forme de bande a lieu par des bandes sans fin (3a, 4a) passant autour de galets de renvoi (3f, 3f1, 4f, 3g, 3h, 4b) ou analogue, et un galet de renvoi intermédiaire (3h) forme l'extrémité avant (3b) active pour le convoyage, dont l'agencement a lieu à un écart dirigé vers l'arrière du galet de renvoi avant (3f), et duquel l'élément de convoyage en forme de bande (3a) s'étend vers le bas vers le galet de renvoi avant (3f).

16. Procédé selon la revendication 15, **caractérisé en ce que** lors du transfert des ébauches (2) du convoyeur arrière au convoyeur avant (3, 4), l'élément de convoyage en forme de bande (3a) du convoyeur arrière (3) est déplacé par l'ébauche à transférer (2) vers le bas.

17. Procédé selon la revendication 16, **caractérisé en ce que** le déplacement dirigé vers le bas est produit par un déplacement dirigé vers l'arrière d'un galet de renvoi intermédiaire (3h), à partir du côté supérieur duquel l'élément de convoyage en forme de bande (3a) s'étend au côté avant de celui-ci d'une manière inclinée à fortement inclinée vers le bas.

18. Procédé selon la revendication 17, **caractérisé par** l'utilisation d'un poussoir (15) qui loge le galet de renvoi intermédiaire (3a) et qui est déplacé par un entraînement de transfert (13) dans un guidage longitudinal (14) du convoyeur arrière (3) d'une position de départ avant vers l'arrière et retour.
